# EUROPEAN PATENT SPECIFICATION

(11) **EP 2 203 656 B1**
(45) Date of publication and mention of the grant of the patent: **20.04.2011**
(21) Application number: 08807201.2
(22) Date of filing: 18.09.2008
(51) Int. Cl.: F16D 65/092

(54) **BRAKE ASSEMBLY FOR MOTOR VEHICLES AND BRAKE PAD FOR THE SAME**
BREMSANORDNUNG FÜR KRAFTFAHRZEUGE UND BREMSBELAG DAFÜR
ENSEMBLE DE FREINAGE POUR VÉHICULES À MOTEUR ET GARNITURE DE FREIN APPROPRIÉE

(30) Priority: 26.09.2007 IT TO20070678
(43) Date of publication of application: 07.07.2010
(73) Proprietor: Matrix Technology S.r.l., 30170 Mestre (VE) (IT)
(72) Inventor: FRACASSO, Alvise, I-30039 Stra (ve) (IT); QUAGGIO, Moreno, 35020 Brugine (PD) (IT)
(74) Representative: De Anna, Pier Luigi
(86) International application number: PCT/IB2008/002589
(87) International publication number: WO 2009/040660

(56) References cited:
- EP-A- 0 642 920
- EP-A- 1 217 246
- GB-A- 2 259 553
- US-A- 5 332 067

## Description

### FIELD OF THE INVENTION

The present invention concerns a brake assembly for motor vehicles and similar, as for instance disclosed in EP-A-1217246.

More in detail, the present invention concerns a hydraulically or electro-hydraulically operated brake assembly for high-performance cars and motorcycles, to which the treatment that follows makes explicit reference, but without any loss in generality.

### BACKGROUND OF THE INVENTION

As is known, all the high-performance cars and motorcycles currently in circulation are equipped with hydraulically or electro-hydraulically operated brake assemblies, which are basically composed of a metal or carbon-ceramic disc of adequate thickness that is solidly fixed to the wheel of the vehicle and coaxial with the latter's axis of rotation so that it can turn around said axis integral with the same wheel, a rigid support structure solidly fixed to the vehicle's suspension such that it is positioned astride the metal or carbon-ceramic disc without coming into direct contact with the latter, a pair of brake pads in a material with a high coefficient of sliding friction, traditionally known as "pads", which are located on the rigid support structure in symmetrical positions on opposite sides of disc so that each one faces a respective face of the disc close to the disc's external edge and, lastly, a set of single-action hydraulic pistons that are placed between the rigid support structure and the two brake pads in order to push the two pads against the body of the disc so as to dissipate the vehicle's kinetic energy by friction, thus causing the vehicle to stop.

Since dissipation of the vehicle's kinetic energy by friction causes a rapid rise in the temperatures of the disc and the brake pads and given that the temperatures reached by these components in the most recent high-performance cars and motorcycles can amply exceed 700°C, in recent years the need has arisen to prevent the hydraulic pistons that push the pads against the disc from reaching temperatures that could cause the oil they contain to boil. This phenomenon would irreparably endanger correct operation of the brake assembly. To avoid this risk, hydraulically operated brake assemblies have been presented during recent years that are equipped with two heat-insulating plates in composite materials, each of which is inserted between a pad of the brake assembly and the hydraulic piston(s) that push the same pad against the disc. More in detail, the two heat-insulating plates in composite materials are fixed on the rear faces of the two brake pads so that they are positioned between the same pads and the cylinder heads of the hydraulic pistons that push the pads against the disc, and each one of them is formed by one or more stacked layers of metal wires opportunely interwoven with glass fibres and/or carbon fibres and/or aramide fibres and embedded in an epoxy resin matrix.

Unfortunately, experimental tests carried out on the new brake assemblies have not given the results hoped for: the current heat-insulating plates in composite materials cannot, in fact, completely insulate the hydraulic pistons from the heat generated by friction of the pads on the surface of the disc, and are limited to reducing the rate at which the oil contained inside the hydraulic pistons heats up and reaches boiling point.

In other words, if used for prolonged periods with particularly heavy braking, even the brake assemblies equipped with heat-insulating plates in composite materials cease to work after a brief period of time, because the oil in the hydraulic pistons cannot cool down sufficiently between successive braking manoeuvres and reaches its boiling point.

### DISCLOSURE OF THE INVENTION

The object of the present invention is that of embodying a hydraulically or electro-hydraulically operated brake assembly for high-performance cars and motorcycles that is immune from boiling risks for the oil contained in the hydraulic pistons that push the pads against the disc.

Therefore, according to the present invention, a brake assembly for motor vehicles and similar is embodied as expressed in claim 1 and preferably, but not necessarily, in any of its dependent claims. Further, a brake pad assembly for a brake assembly for motor vehicles and similar is embodied as expressed in claim 8 and preferably, but not necessarily, in any of its dependent claims.

### BRIEF DESCRIPTION OF THE DRAWINGS

The present invention shall now be described with reference to the enclosed drawings, which illustrate a non-limitative embodiment, where;
- Figure 1 shows an exploded perspective view of a brake assembly, for motor vehicles and similar, embodied according to the principles of the present invention,
- Figure 2 shows a perspective view, with parts removed for clarity, of a detail of a component of the brake assembly for motor vehicles and similar shown in Figure 1, while
- Figure 3 is a front view, with parts in section and parts removed for clarity, of an embodied variant of the brake assembly shown in the previous figures.

### DETAILED DESCRIPTION OF PREFERRED EMBODIMENTS

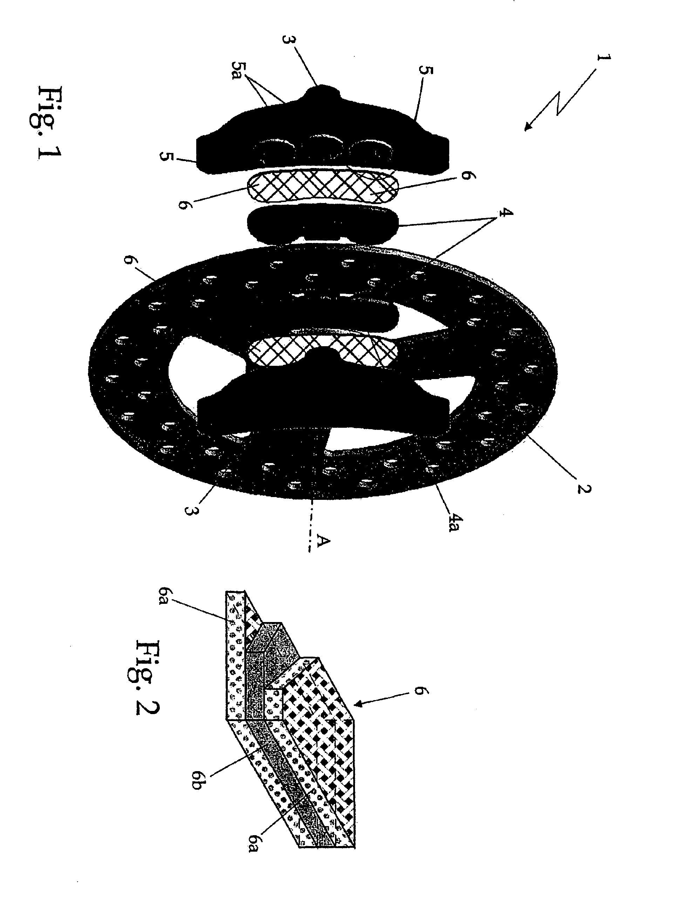

With reference to Figure 1, reference numeral 1 indicates, in its entirety, a hydraulically operated brake assembly for motor vehicles and similar that finds particularly advantageous utilization in high-performance cars and motorcycles.

The brake assembly 1 comprises a metal or carbon-ceramic disc 2 of adequate thickness, which is suitable for being solidly fixed to the wheel of the vehicle (not shown) or, alternatively, to the hub (not shown) that supports the wheel of the vehicle, so that it is placed coaxially to the wheel's axis A of rotation and so that it can turn around said axis A integral with the same wheel, and a rigid support structure 3 that is solidly fixed to the vehicle's suspension (not shown) such that it is positioned astride the disc 2, but without coming into direct contact with the latter.

The brake assembly 1 is also equipped with a pair of brake pads 4 in a material with a high coefficient of sliding friction, traditionally known as "pads", which are mounted in a movable manner on the rigid support structure 3, on opposite sides of the disc 2 in symmetrical positions with respect to each other such that the two pads 4 are aligned with each other and each pad 4 faces a respective face of the disc 2 close to the disc's external edge, and a set of single-action hydraulic pistons 5 that are housed in the rigid support structure 3 behind both of the pads 4 and that, when operated, are able to push the two pads 4 against the body of the disc 2 to make the two pads 4 rub against the surface of the disc 2. Rubbing that progressively reduces the speed of rotation of the disc 2, and the vehicle wheel with which it is integral, around axis A, until the vehicle is completely stopped.

With reference to Figure 1, the brake assembly 1 also comprises two heat-insulating plates 6 in composite materials, each of which is inserted between a respective pad 4 and the hydraulic piston(s) 5 that push said pad 4 against the disc 2.

More in detail, in the example shown, each of the two heat-insulating plates 6 is fixed on the rear face 4a of a respective pad 4, so that it is positioned between the body of the pad 4 and the cylinder head(s) 5a of the hydraulic piston(s) 5 that push the pads 4 against the disc 2.

The disc 2, the rigid support structure 3, the pads 4 and the hydraulic pistons 5 are components that are well known in the sector and therefore shall not be described any further. Instead, regarding the heat-insulating plates 6, with reference to Figure 2, each one of them has a multilayered structure that, unlike currently known solutions, comprises two external layers 6a of composite material formed by carbon fibres opportunely interwoven together and embedded in a polymer resin bonding matrix, and at least one compact central layer 6b of silicate and, more specifically, of potassium aluminosilicate (chemical formula K₂ Al₆ Si₆ O₂₀ (OH) ₄) which preferably, but not necessarily, has a molar mass of 796.63 g/mole and preferably, but not necessarily, a density between 2.5 and 2.7 g/cm³.

More in detail, the two external layers 6a of the heat-insulating plate 6 preferably, but not necessarily, have a thickness between 0.1 and 3 millimetres and are both formed by a carbon fibre mesh or fabric, preferably, but not necessarily, of the "TWILL" or "PLANE" type, which has a surface density between 150 and 250 g/m² (grams per square metre), while the bonding matrix of both the external layers 6a consists of a high-temperature phenol-acrylic bonding resin with a working temperature greater than 800°C.

Instead, the central layer 6b preferably, but not necessarily, has a thickness between 0.1 and 1.5 millimetres and is firmly fixed to the two external layers 6a so as to form a monolithic body.

Alternatively, the composite material is formed by a fibre selected from the group of pitch based carbon fibre, PAN based carbon fibre, E-glass fibre, S-glass fibre, Boron fibers, Ceramic fibres, Quartz fibres and high silica fibres. opportunely interwoven together and embedded in a polymer resin bonding matrix. Advantageously, said fibres are woven or non-woven fibres.

Alternatively, said one compact inner layer (6b) is of a material selected from the group of mica paper and phlogopite mica paper.

According to a preferred embodiment said polymer bonding resin that forms the two external layers (6a) of composite material is a resin selected from the group of phenol-acrylic bonding resin, phenolic resin, phenol resin based combinations, poly-imide resins and high-temperature silicone resins.

More specifically, in the example shown, the central layer 6b of the heat-insulating plate 6 has a thickness of approximately 0.8 millimetres and is made of potassium aluminosilicate, while the two external layers 6a have a thickness of approximately 1.5 millimetres and are both formed by a carbon fibre mesh or fabric, preferably, but not necessarily, of the "TWILL" or "PLANE" type, which has a surface density of approximately 200 g/m² (grams per square metre). The bonding matrix of the external layer 6a consists instead of a high-temperature phenol-acrylic bonding resin with a working temperature greater than 1000°C.

The functioning of the brake assembly 1 is easily deduced from that described above and therefore does not require further explanation, except for specifying that the special structure of the heat-insulating plate 6 offers such a high heat insulation capacity as to prevent the transfer of heat to the hydraulic pistons 5 even when the disc 2 and the pads 4 reach temperatures in excess of 900°C.

In other words, the heat-insulating plate 6 is able to constantly keep the oil present inside the hydraulic pistons 5 well below the boiling point, even when the temperature of the disc 2 and the pads 4 reaches 900°C.

The advantages offered by the above-described heat-insulating plates 6 are evident: the brake assemblies 1 made in this manner are able to support particularly severe conditions of use for extremely long periods without showing the slightest loss in efficiency.

Finally, it is clear that modifications and variants can be made to the above-described brake assembly 1 without leaving the scope of the present invention.

For example, the heat-insulating plates 6 could be provided with two central layers 6b of potassium aluminosilicate, between which an intermediate layer in a composite material is inserted, preferably, but not necessarily, formed by carbon fibres opportunely interwoven together and embedded in an epoxy resin matrix.

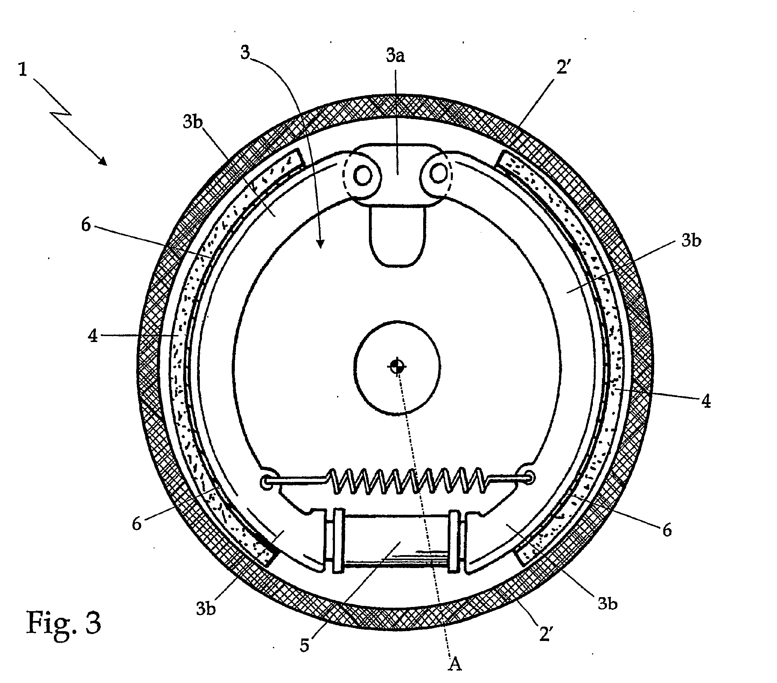

Instead, according to the embodiment variant shown in Figure 3, the brake assembly 1 can be equipped with a drum 2' in substitution of the disc 2. Similarly to the disc 2, the drum 2' is rigidly fixed to the hub that supports the wheel of the vehicle so that it is able to rotate integrally with wheel around the wheel's axis A of rotation.

In this case, the rigid support structure 3 is provided with a central body 3a that projects inside the drum 2', and two arc-shaped brake shoes 3b that are hinged on the central body 3a inside the drum so as to be able to move apart under the pressure of the hydraulic pistons 5 carried on the rigid support structure 3.

In this embodiment variant, the two linings 4 both have a curved shape and are rigidly fixed to the two brake shoes 3b so that they can be brought into contact with the internal cylindrical surface of the drum 2' when the brake shoes 3b are extended by the hydraulic pistons 5, while the heat-insulating plates 6 are inserted between the linings 4 and the brake shoes 3b on which the hydraulic pistons 5 operate.

According to a further embodiment variant, not shown, the rigid support structure 3 can be fixed in a floating manner to the vehicle's suspension, i.e. to the structure that supports the wheel of the vehicle. In this case, one of the two pads 4 is fixed directly on the rigid support structure 3 and the hydraulic pistons 5 are only housed in the rigid support structure 3 behind the pad 4 mounted in a movable manner on the rigid support structure 3.

In this embodiment variant, the brake assembly 1 can be devoid of the heat-insulating plate 6 inserted between the rigid support structure 3 and the pad 4 directly anchored to this structure.

## Claims

1. Brake assembly (1) for motor vehicles and similar comprising a rotating body (2 and 2') that is integral with a wheel of the vehicle such that it can rotate together with the same wheel around the wheel's axis of rotation (A), a support structure (3) firmly fixed to the structure of the vehicle that supports said wheel so as to be positioned close said rotating body (2 and 2'), at least one brake pad (4) in a material with a high coefficient of friction that is mounted in a movable manner on said support structure (3) such that can make contact with the surface of said rotating body (2 and 2'), and means of support and hydraulically operated movement (5 and 3b) able to selectively push said pad against the surface of said rotating body (2 and 2'), said brake assembly (1) also comprising at least one heat-insulating plate (6) inserted between said pad (4) and said means of support and hydraulically operated movement (5 and 3b) and being **characterized in that** said heat-insulating plate (6) has a multilayered structure that comprises two external layers (6a) of composite material and at least one compact inner layer (6b) of a material selected from the group of compact silicate, mica paper and phlogopite mica paper.

2. Brake assembly according to claim 1, **characterized in that** said compact inner layer (6b) is made of potassium aluminosilicate,
wherein preferably said compact inner layer (6b) of potassium aluminosilicate has a density between 2.5 and 2.7 g/cm³,
more preferably said potassium aluminosilicate has a molar weight substantially equal to 796.63 g/mole.

3. Brake assembly according to any of the previous claims, **characterized in that** the two external layers (6a) of composite material are formed by a fibre selected from the group of carbon fibre, pitch based carbon fibre, PAN based carbon fibre, E-glass fibre, S-glass fibre, Boron fibbers, Ceramic fibres, Quartz fibres and high silica fibres,
wherein preferably said fibres are woven or non-woven fibres,
more preferably the polymer bonding resin that forms the two external layers (6a) of composite material is a resin selected from the group of phenol-acrylic bonding resin, phenolic resin, phenol resin based combinations, poly-imide resins and high-temperature silicone resins.

4. Brake assembly according to claim 3, **characterized in that** each said external layer (6a) of composite material comprises a carbon fibre mesh or fabric having a surface density between 150 and 250 g/m².

5. Brake assembly according to any of the previous claims, **characterized in that** said compact inner layer (6b) of silicate has a thickness between 0.1 and 1.5 millimetres.

6. Brake assembly according to any of the previous claims, **characterized in that** each said external layer (6a) of composite material has a thickness between 0.1 and 3 millimetres.

7. Brake assembly according to any of the previous claims, **characterized in that** said rotating body (2 and 2') is a disc (2), and that said support structure (3) is positioned astride said disc (2), said brake assembly (1) also being equipped with two pads (4), in a material with a high coefficient of friction, which are located on the rigid support structure (3) on opposite sides of the disc (2) in symmetrical positions with respect to each other, said means of support and hydraulically operated movement (5 and 3b) instead comprising a set of hydraulic pistons (5) that are housed in the support structure (3) behind at least one of said pads (4) and are able, when operated, to push this/these pad(s) (4) against the body of said disc (2).

8. Brake pad assembly for the brake assembly of claim 1 comprising at least one brake pad (4) and at least one heat-insulating plate (6), being **characterized in that** said heat-insulating plate (6) has a multilayered structure that comprises two external layers (6a) of composite material and at least one compact inner layer (6b) of a material selected from the group of compact silicate, mica paper and phlogopite mica paper.

9. Brake pad assembly according to claim 8, **characterized in that** said compact inner layer (6b) is made of potassium aluminosilicate,
Preferably said compact inner layer (6b) of potassium aluminosilicate has a density between 2.5 and 2.7 g/cm³,
more preferably said potassium aluminosilicate has a molar weight substantially equal to 796.63 g/mole.

10. Brake pad assembly according to claim 8 or 9, **characterized in that** the two external layers (6a) of composite material are formed by a fibre selected from the group of carbon fibre, pitch based carbon fibre, PAN based carbon fibre, E-glass fibre, S-glass fibre, Boron fibbers, Ceramic fibres, Quartz fibres and high silica fibres,
wherein preferably said fibres are woven or non-woven fibres, more preferably the polymer bonding resin that forms the two external layers (6a) of composite material is a resin selected from the group of phenol-acrylic bonding resin, phenolic resin, phenol resin based combinations, poly-imide resins and high-temperature silicone resins.

11. Brake pad assembly according to claim 10, **characterized in that** each said external layer (6a) of composite material comprises a carbon fibre mesh or fabric having a surface density between 150 and 250 g/m².

12. Brake pad assembly according to any of claims 8 to 11, **characterized in that** said compact inner layer (6b) of silicate has a thickness between 0.1 and 1.5 millimetres.

13. Brake pad assembly according to any of claims 8 to 12, **characterized in that** each said external layer (6a) of composite material has a thickness between 0.1 and 3 millimetres.

## Patentansprüche

1. Bremsanordnung (1) für Motorfahrzeuge und andere Fahrzeuge, welche umfasst: einen rotierenden Körper (2 und 2'), welcher mit einem Rad des Fahrzeugs dergestalt fest verbunden ist, dass er zusammen mit selbigem Rad sich um die Drehachse (A) des Rades drehen kann, eine Tragkonstruktion (3), welche an der Fahrzeugstruktur, an der das Rad befestigt ist, dergestalt fest angebracht ist, dass sie dicht am genannten rotierenden Körper (2 und 2') positioniert werden kann, mindestens einen Bremsklotz (4) aus einem Material mit einem hohen Reibungskoeffizienten, welcher auf abnehmbare Weise dergestalt an die genannte Tragkonstruktion (3) montiert ist, dass er mit der Oberfläche des genannten rotierenden Körpers (2 und 2') in Kontakt kommen kann, und Mittel zum Halten und zur hydraulisch betätigten Bewegung (5 und 3b), welche imstande sind, auf wählbare Weise den genannten Bremsklotz gegen die Fläche des genannten rotierenden Körpers (2 und 2') zu drücken, wobei die genannte Bremsanordnung (1) auch mindestens eine wärmedämmende Platte (6) aufweist, welche sich zwischen dem genannten Bremsklotz (4) und den genannten Mitteln zum Halten und zur hydraulisch betätigten Bewegung (5 und 3b) befindet, **dadurch gekennzeichnet, dass** die genannte wärmedämmende Platte (6) einen Mehrschichtaufbau aufweist, welcher zwei Verbundstoff-Außenschichten (6a) und mindestens eine kompakte Innenschicht (6b) aus einem Material umfasst, welches aus der Gruppe der folgenden Materialien ausgewählt wird: kompaktes Silikat, Glimmerpapier und Magnesiaglimmerpapier.

2. Bremsanordnung nach Anspruch 1, **dadurch gekennzeichnet, dass** die genannte kompakte Innenschicht (6b) aus Kaliumaluminosilikat besteht,
wobei die genannte kompakte Innenschicht (6b) aus Kaliumaluminosilikat eine Dichte von vorzugsweise zwischen 2,5 und 2,7 g/cm³ aufweist, wobei stärker vorzuziehen ist, dass das genannte Kaliumaluminosilikat ein Molgewicht im Wesentlichen gleich 796,63 g/Mol aufweist.

3. Bremsanordnung nach einem der vorangehenden Ansprüche, **dadurch gekennzeichnet, dass** die beiden Verbundstoff-Außenschichten (6a) aus einem Fasermaterial bestehen, welches aus der Gruppe der folgenden Materialien ausgewählt wird: Kohlefaser, Kohlefaser auf Pechgrundlage, Kohlefaser auf der Grundlage von Peroxyacetylnitrat, Fasermaterial aus E-Glas, Fasermaterial aus S-Glas, Borfasern, Keramikfasern, Quarzfasern und Fasern aus Kieselglas,
wobei vorzugsweise die genanten Fasermaterialien gewebte oder nichtgewebte Fasermaterialien sind stärker vorzuziehen ist, dass das Harz mit Polymerbindung, welches die beiden Verbundstoff-Außenschichten (6a) bildet, ein Harz ist, welches aus der Gruppe der folgenden Materialien ausgewählt wird: Harz mit Phenolacryl-Bindung, Phenolharz, Verbindungen auf Phenolharzgrundlage, Polyimidharze und Hochtemperatur-Silikonharze.

4. Bremsanordnung nach Anspruch 3, **dadurch gekennzeichnet, dass** jede genannte Verbundstoff-Außenschicht (6a) ein Kohlefasernetz oder -gewebe umfasst, welches eine flächenbezogene Masse zwischen 150 und 250 g/m² aufweist.

5. Bremsanordnung nach irgend einem der vorangehenden Ansprüche, **dadurch gekennzeichnet, dass** die genannte kompakte Silikat-Innenschicht (6b) eine Stärke zwischen 0,1 und 1,5 Millimeter aufweist.

6. Bremsanordnung nach irgend einem der vorangehenden Ansprüche, **dadurch gekennzeichnet, dass** die genannte kompakte Verbundstoff-Außenschicht (6a) eine Stärke zwischen 0,1 und 3 Millimeter aufweist.

7. Bremsanordnung nach irgend einem der vorangehenden Ansprüche, **dadurch gekennzeichnet, dass** der genannte rotierende Körper (2 und 2') eine Scheibe (2) ist und dass die genannte Tragkonstruktion (3) rittlings zu der genannten Scheibe (2) positioniert ist, wobei die genannte Bremsanordnung (1) auch mit zwei Bremsklötzen (4) aus einem Material mit einem hohen Reibungskoeffizienten ausgestattet ist, welche sich auf der starren Tragkonstruktion (3) auf einander gegenüber liegenden Seiten der Scheibe (2) in zueinander symmetrischen Anordnungen befinden, wobei die genannten Mittel zum Halten und zur hydraulisch betätigten Bewegung (5 und 3b) einen Satz von Hydraulikkolben (5) umfassen, die sich in der Tragkonstruktion (3) hinter mindestens einem der genannten Bremsklötze (4) befinden und imstande sind, wenn sie angesteuert werden, diesen Bremsklotz (4) oder diese Bremsklötze (4) gegen den Körper der genannten Scheibe (2) zu drücken.

8. Bremsklotzanordnung für die Bremsanordnung nach Anspruch 1, welche mindestens einen Bremsklotz (4) und mindestens eine wärmedämmende Platte (6) umfasst, **dadurch gekennzeichnet, dass** die genannte wärmedämmende Platte (6) einen Mehrschichtaufbau aufweist, welcher zwei Außenschichten (6a) und mindestens eine kompakte Innenschicht (6b) aus einem Material aufweist, das aus der Gruppe der folgenden Materialien ausgewählt wird: kompaktes Silikat, Glimmerpapier und Magnesiaglimmerpapier.

9. Bremsklotzanordnung nach Anspruch 8, **dadurch gekennzeichnet, dass** die genannte kompakte Innenschicht (6b) aus Kaliumaluminosilikat besteht und die genannte kompakte Innenschicht (6b) aus Kaliumaluminosilikat eine Dichte von vorzugsweise zwischen 2,5 und 2,7 g/cm³ aufweist, wobei stärker vorzuziehen ist, dass das genannte Kaliumaluminosilikat ein Molgewicht im Wesentlichen gleich 796,63 g/Mol aufweist.

10. Bremsklotzanordnung nach Anspruch 8 oder 9, **dadurch gekennzeichnet, dass** die beiden Verbundstoff-Außenschichten (6a) aus einem Fasermaterial bestehen, welches aus der Gruppe der folgenden Materialien ausgewählt wird: Kohlefaser, Kohlefaser auf Pechgrundlage, Kohlefaser auf der Grundlage von Peroxyacetylnitrat, Fasermaterial aus E-Glas, Fasermaterial aus S-Glas, Borfasern, Keramikfasern, Quarzfasern und Fasern aus Kieselglas,
wobei vorzugsweise die genanten Fasermaterialien gewebte oder nichtgewebte Fasermaterialien sind und stärker vorzuziehen ist, dass das Harz mit Polymerbindung, welche die beiden Verbundstoff-Außenschichten (6a) bildet, ein Harz ist, welches aus der Gruppe der folgenden Materialien ausgewählt wird: Harz mit Phenolacryl-Bindung, Phenolharz, Verbindungen auf Phenolharzgrundlage, Polyimidharze und Hochtemperatur-Silikonharze.

11. Bremsklotzanordnung nach Anspruch 10, **dadurch gekennzeichnet, dass** jede genannte Verbundstoff-Außenschicht (6a) ein Kohlefasernetz oder -gewebe umfasst, welches eine flächenbezogene Masse zwischen 150 und 250 g/m² aufweist.

12. Bremsklotzanordnung nach irgend einem der Ansprüche 8 bis 11, **dadurch gekennzeichnet, dass** die genannte kompakte Silikat-Innenschicht (6b) eine Stärke zwischen 0,1 und 1,5 Millimeter aufweist.

13. Bremsklotzanordnung nach irgend einem der Ansprüche 8 bis 12, **dadurch gekennzeichnet, dass** jede genannte Verbundstoff-Außenschicht eine Stärke zwischen 0,1 und 3 Millimeter aufweist.

## Revendications

1. Ensemble de frein (1) pour véhicules à moteur et similaires comprenant un corps rotatif (2 et 2') qui est solidaire d'une roue du véhicule de sorte qu'il peut tourner conjointement à la même roue autour de l'axe de rotation (A) de la roue, une structure de support (3) fermement fixée sur la structure du véhicule qui supporte ladite roue afin d'être positionnée à proximité dudit corps rotatif (2 et 2'), au moins une plaquette de frein (4) réalisée à partir d'un matériau avec un coefficient de friction élevé qui est montée d'une manière mobile sur ladite structure de support (3) de sorte qu'elle peut établir le contact avec la surface dudit corps rotatif (2 et 2') et des moyens de support et de mouvement à actionnement hydraulique (5 et 3b) pouvant sélectivement pousser ladite plaquette contre la surface dudit corps rotatif (2 et 2'), ledit ensemble de frein (1) comprenant également au moins une plaque thermo-isolante (6) insérée entre ladite plaquette (4) et lesdits moyens de support et de mouvement à actionnement hydraulique (5 et 3b), et étant **caractérisé en ce que** ladite plaque thermo-isolante (6) a une structure multicouches qui comprend deux couches externes (6a) de matériau composite et au moins une couche interne compacte (6b) réalisée avec un matériau choisi dans le groupe comprenant le silicate compact, le papier de mica et le papier de phlogopite.

2. Ensemble de frein selon la revendication 1, **caractérisé en ce que** ladite couche interne compacte (6b) est réalisée à partir d'aluminosilicate de potassium, dans lequel, de préférence, ladite couche interne compacte (6b) en aluminosilicate de potassium a une densité comprise entre 2,5 et 2,7 g/cm³, encore de préférence ledit aluminosilicate de potassium a un poids molaire sensiblement égal à 796,63 g/mole.

3. Ensemble de frein selon l'une quelconque des revendications précédentes, **caractérisé en ce que** les deux couches externes (6a) de matériau composite sont formées par une fibre choisie dans le groupe comprenant les fibres de carbone, les fibres de carbone à base de brai, les fibres de carbone à base de PAN, les fibres de verre E, les fibres de verre S, les fibres de bore, les fibres de céramiques, les fibres de quartz et les fibres à haute teneur en silice, dans lequel de préférence lesdites fibres sont des fibres tissées ou non tissées, de préférence la résine liante polymère qui forme les deux couches externes (6a) de matériau composite est une résine choisie dans le groupe comprenant la résine liante acrylique phénolique, la résine phénolique, des combinaisons à base de résine phénolique, des résines polyimides et des résines de silicone à haute température.

4. Ensemble de frein selon la revendication 3, **caractérisé en ce que** chacune desdites couches externes (6a) de matériau composite comprend une maille ou tissu de fibres de carbone ayant une densité de surface comprise entre 150 et 250 g/m².

5. Ensemble de frein selon l'une quelconque des revendications précédentes, **caractérisé en ce que** ladite couche interne compacte (6b) de silicate a une épaisseur comprise entre 0,1 et 1,5 millimètre.

6. Ensemble de frein selon l'une quelconque des revendications précédentes, **caractérisé en ce que** chacune desdites couches externes (6a) de matériau composite a une épaisseur comprise entre 0,1 et 3 millimètres.

7. Ensemble de frein selon l'une quelconque des revendications précédentes, **caractérisé en ce que** ledit corps rotatif (2 et 2') est un disque (2), et **en ce que** ladite structure de support (3) est positionnée à califourchon sur ledit disque (2), ledit ensemble de frein (1) étant également équipé de deux plaquettes (4) réalisées avec un matériau ayant un coefficient de friction élevé, qui sont positionnées sur la structure de support rigide (3) sur les côtés opposés du disque (2) dans des positions symétriques l'une par rapport à l'autre, lesdits moyens de support et de mouvement à actionnement hydraulique (5 et 3b) comprenant plutôt un ensemble de pistons hydrauliques (5) qui sont logés dans la structure de support (3) derrière au moins l'une desdites plaquettes (4) et peuvent, lorsqu'ils sont actionnés, pousser cette (ces) plaquette(s) (4) contre le corps dudit disque (2).

8. Ensemble de plaquette de frein pour l'ensemble de frein selon la revendication 1, comprenant au moins une plaquette de frein (4) et au moins une plaque thermo-isolante (6), étant **caractérisé en ce que** ladite plaque thermo-isolante (6) a une structure multicouches qui comprend deux couches externes (6a) de matériau composite et au moins une couche interne compacte (6b) réalisée avec un matériau choisi dans le groupe comprenant le silicate compact, le papier de mica et le papier de phlogopite.

9. Ensemble de plaquette de frein selon la revendication 8, **caractérisé en ce que** ladite couche interne compacte (6b) est réalisée à partir l'aluminosilicate de potassium, de préférence ladite couche interne compacte (6b) d'aluminosilicate de potassium a une densité comprise entre 2,5 et 2,7 g/cm³, encore de préférence ledit aluminosilicate de potassium a un poids molaire sensiblement égal à 796,63 g/mole.

10. Ensemble de plaquette de frein selon la revendication 8 ou 9, **caractérisé en ce que** les deux couches externes (6a) de matériau composite sont formées avec une fibre choisie dans le groupe comprenant les fibres de carbone, les fibres de carbone à base de brai, les fibres de carbone à base de PAN, les fibres de verre E, les fibres de verre S, les fibres de bore, les fibres de céramique, les fibres de quartz et les fibres à haute teneur en silice, dans lequel de préférence lesdites fibres sont des fibres tissées ou non tissées, encore de préférence la résine liante polymère qui forme les deux couches externes (6a) de matériau composite est une résine choisie dans le groupe comprenant la résine liante acrylique phénolique, la résine phénolique, des combinaisons à base de résine phénolique, des résines polyimides et des résines de silicone à haute température.

11. Ensemble de plaquette de frein selon la revendication 10, **caractérisé en ce que** chacune desdites couches externes (6a) de matériau composite comprend une maille ou tissu en fibres de carbone ayant une densité de surface comprise entre 150 et 250 g/m².

12. Ensemble de plaquette de frein selon l'une quelconque des revendications 8 à 11, **caractérisé en ce que** ladite couche interne compacte (6b) de silicate a une épaisseur comprise entre 0,1 et 1,5 millimètre.

13. Ensemble de plaquette de frein selon l'une quelconque des revendications 8 à 12, **caractérisé en ce que** chacune desdites couches externes (6a) de matériau composite a une épaisseur comprise entre 0,1 et 3 millimètres.
